# EUROPEAN PATENT APPLICATION

(11) **EP 1 083 020 A2**
(43) Date of publication of application: **14.03.2001**
(21) Application number: 00115594.4
(22) Date of filing: 19.07.2000
(51) Int. Cl.: B23K 35/26, C22C 13/00

(54) **Tin-silver-based soldering alloy**

(30) Priority: 07.09.1999 JP 25280399
(71) Applicant: Mitsui Mining & Smelting Co., Ltd, Tokyo 141-8584 (JP)
(72) Inventor: Matsunaga, Junichi, c/o Mitsui Mining & Smelting, Ageo-shi, Saitama-ken (JP); Nakahara, Yuunosuke, c/o Mitsui Mining & Smelting, Ageo-shi, Saitama-ken (JP); Ninomiya, Ryuji, c/o Mitsui Mining & Smelting, Ageo-shi, Saitama-ken (JP)
(74) Representative: Forstmeyer, Dietmar, Dr. rer. nat., Dipl.-Chem.

(57) **Abstract**

A tin-silver-based soldering alloy, comprises 3 to 4 % by weight of Ag, 5 to 10 % by weight of In, 2 to 6 % by weight of Bi, and the balance being Sn, wherein In + Bi < 12 % by weight, and Bi ≦ In.

## Description

### BACKGROUND OF THE INVENTION

### [Field of the Invention]

The present invention relates to a tin-silver-based soldering alloy, and more particularly, to a tin-silver-based soldering alloy having a melting point of 210 °C or lower, i.e., a low melting point, and excellent in mechanical properties such as tensile strength and elongation.

### [Description of the Related Art]

Conventionally, an alloy having a eutectic composition near Pb-Sn has been known as a typical soldering alloy. Further, an alloy made of Zn-Cd having a higher strength than that of a Pb-Sn eutectic soldering alloy or the like has also been known. However, the former soldering alloy has a problem of toxicity of lead and the latter soldering alloy has a problem of an adverse effect of cadmium evaporation to an operator. Therefore, neither has solved these recent environmental problems.

Under such circumstances, there have been proposed various types of tin-silver-based soldering alloy not containing harmful Pb, Cd, or the like. For example, there is known "Alloy H" comprising 2.0 % by weight of Ag, 0.5 % by weight of Cu, 7.5 % by weight of Bi, and the balance being Sn. The "Alloy H" has a melting point which is higher than that of the Pb-Sn eutectic soldering alloy and lower than that of the conventional tin-silver-based soldering alloy not containing Pb, Cd, or the like, i.e., 212°C, and thus excellent in fusing properties. However, the elongation, i.e., mechanical property of "Alloy H" is low. Therefore, the "Alloy H" cannot absorb the thermal expansion difference between a substrate and a part when the soldered portion is subjected to a temperature cycles. Consequently, the soldered portion might be broken.

From such a viewpoint, there is proposed a tin-silver-based soldering alloy containing Bi and In in respective given amounts as a soldering alloy excellent in mechanical properties such as tensile strength and elongation (Japanese Patent Laid-Open Publication No.71488/98). However, this tin-silver-based soldering alloy is excellent in mechanical properties, but has a high melting point. Therefore, a soldering alloy usable at lower temperatures is desired.

### SUMMARY OF THE INVENTION

Accordingly, an object of the present invention to provide a soldering alloy having a low melting point without degrading the mechanical properties.

As a result of extensive studies, the present inventors found that the above object can be achieved by setting the contents of bismuth and indium so as to satisfy a given relationship in a tin-silver-based soldering alloy containing bismuth and indium in respective given amounts.

The present invention has been achieved based on the above findings, and provides a tin-silver-based soldering alloy comprising 3 to 4 % by weight of Ag, 5 to 10 % by weight of In, 2 to 6 % by weight of Bi, and the balance being Sn, and wherein In + Bi < 12 % by weight, and Bi ≦ In.

The tin-silver-based soldering alloy of the present invention contains no harmful Pb, Cd, and the like, will not degrade the mechanical properties, and has a low melting point. Therefore, the soldering temperature can be lowered. Further, since the tin-silver-based soldering alloy of the present invention exhibits no low-temperature eucteric peak, the thermal stress characteristic can be improved.

### DETAILED DESCRIPTION OF THE INVENTION

The present invention will now be described hereunder in detail.

The Ag content of the tin-silver-based soldering alloy of the present invention is 3 to 4 % by weight, and optimally 3.5 % by weight, but it falls within the above range from the viewpoint of the manufacturing yield during manufacturing of the soldering alloy. The In content is 5 to 10 % by weight, and preferably over 6 to 10 % by weight. If the In content is less than 5 % by weight, the melting point becomes higher. If it exceeds 10 % by weight, a low-temperature eutectic peak appears, and the thermal stress characteristic is degraded. Further, the Bi content is 2 to 6 % by weight. If the Bi content is less than 2 % by weight, the melting point becomes higher. If it exceeds 6 % by weight, the elongation is reduced.

In the tin-silver-based soldering alloy of the present invention, it is required for In and Bi to have the following relationship. That is, In + Bi < 12 % by weight, and Bi ≦ In. If In + Bi ≧ 12 % by weight, the degradation in elongation becomes significant. If Bi > In, the low-temperature eutectic peak appears. Incidentally, in the case where Bi and In are added individually as third elements, the low-temperature eutectic peak is observed. However, the low-temperature eutectic peak disappears by adding both the elements in combination so as to satisfy the above relationship and the thermal stress characteristic is improved.

The present invention will be illustrated in great detail by way of Examples.

### [Experimental Example 1]

### 〈Melting point when Bi and In are added in combination to a Sn-3.5 wt.% Ag composition〉

Sn, Ag, Bi, and In were weighed for a total weight of 10 Kg so as to have a composition shown in Table 1, and the mixture was molten in an electric furnace in the atmosphere using a graphite crucible. The melting temperature was set at 300 °C. The molten mixture was allowed to cool, and the melting point thereof was measured by means of a thermocouple-type thermometer. The results are shown in Table 1. It is indicated that the data including a numerical value written on the right of a slash refers to the case where a low-temperature eutectic occurred, and the numerical value thereof denotes the peak temperature of the low-temperature eutectic.

Further, after each metal was completely molten, the mixture was stirred sufficiently to avoid gravity segregation, and cast in a mold having inner dimensions of 150 × 60 mm and a height of 150 mm, with a mold thickness of 10 mm. From the lower part of the casting obtained, a JIS No. 4 test piece was taken by machining and evaluated for the elongation in accordance with a test method based on JIS Z2241. The results are shown in Table 2. It is indicated that the weight percentages of Bi and In shown in Tables 1 and 2 are the values with respect to the Sn-3.5 wt.% Ag composition.

**Table 1**

| Melting Point (°C) | | In (wt%) | | | | |
|---|---|---|---|---|---|---|
| | | 3 | 5 | 8 | 10 | 12 |
| Bi (wt%) | 0 | - | 214 | 210 | 205 | 201/118 |
| | 2 | 214 | 209 | 205 | 203 | 199 |
| | 4 | - | 208 | 202 | 200 | - |
| | 6 | 207/138 | 205/101 | 201 | 198 | 194 |
| | 8 | - | 203/101 | 196 | 195 | - |

**Table 2**

| Elongation (%) | | In (wt%) | | | | |
|---|---|---|---|---|---|---|
| | | 3 | 5 | 8 | 10 | 12 |
| Bi (wt%) | 0 | - | 29 | - | 20 | - |
| | 2 | - | 25 | 20 | 17 | - |
| | 4 | - | 18 | 13 | 9 | - |
| | 6 | 13 | 11 | 5 | - | - |
| | 8 | - | 4 | - | - | - |

Apparent from the results of Tables 1 and 2, the melting point of the soldering alloy decreases with an increase in content of Bi and In, while the elongation is within a given range and has an optimum value. Therefore, it is required for Bi and In to be within a given range and have a prescribed relationship in order to lower the melting point and achieve a high elongation.

### [Experimental Example 2]

### 〈Comparison between initial elongation and elongation after the heat treatment〉

Initial elongation after casting and elongation after heat treatment at 150 °C for 300 hours were evaluated in the same manner as described above for the Sn-3.5 wt.% Ag-6 wt.% In-3 wt.% Bi composition (Example 1) and Sn-3.5 wt.% Ag-3 wt.% In-6 wt.% Bi composition (Comparative Example 1). The results are shown in Table 3.

**Table 3**

| Example· Comparative Example | Composition (wt%) | Elongation (%) | |
|---|---|---|---|
| | | Initial stage of casting | After heat treatment at 150 °C for 300 hours |
| Example 1 | Sn-3.5Ag-6In-3Bi | 21 | 23 |
| Comparative Example 1 | Sn-3.5Ag-3In-6Bi | 13 | 4 |

As shown in Table 3, Example 1 is more excellent in initial elongation and elongation after heat treatment, especially elongation after heat treatment as compared with Comparative Example 1.

## Claims

1. A tin-silver-based soldering alloy, comprising 3 to 4 % by weight of Ag, 5 to 10 % by weight of In, 2 to 6 % by weight of Bi, and the balance being Sn, wherein In + Bi < 12 % by weight, and Bi ≦ In.
